# FASCICULE DE BREVET EUROPEEN

(11) **EP 1 085 147 B1**
(45) Date de publication et mention de la délivrance du brevet: **02.11.2005**
(21) Numéro de dépôt: 00127566.8
(22) Date de dépôt: 25.10.1996
(51) Int. Cl.: E05B 49/00, G07C 9/00

(54) **Système mains libres de déverrouillage et/ou ouverture d'ouvrant de véhicule automobile**
Handfreies System zum Entriegeln und/oder Öffnen einer Kraftfahrzeugöffnung
Hands-free system to unlock and/or to open a motor vehicle opening

(30) Priorité: 26.10.1995 FR 9512640; 22.07.1996 FR 9609166
(43) Date de publication de la demande: 21.03.2001
(62) Demande divisionnaire de: 96402276.8
(73) Titulaire: VALEO SECURITE HABITACLE S.A.S., 94042 Créteil Cédex (FR)
(72) Inventeur: Garnault, Joel, 95110 Sannois (FR)
(74) Mandataire: Hervouet, Sylvie

(56) Documents cités:
- DE-A- 3 820 248
- FR-A- 2 628 471
- US-A- 4 354 189
- US-A- 4 521 712
- US-A- 4 667 195
- MOTOKI HIRANO ET AL: "KEYLESS ENTRY SYSTEM WITH RADIO CARD TRANSPONDER" IEEE TRANSACTIONS ON INDUSTRIAL ELECTRONICS, IEEE INC. NEW YORK, US, vol. 35, no. 2, 1 mai 1988 (1988-05-01), pages 208-216, XP000096890 ISSN: 0278-0046

## Description

L'invention concerne les systèmes de verrouillage/déverrouillage et/ou d'ouverture d'ouvrants de véhicules automobiles.

Il existe actuellement des systèmes d'assistance à l'ouverture ou d'ouverture automatique de coffre, qui utilisent des télécommandes actionnées manuellement. De tels systèmes nécessitent la disponibilité d'au moins une main de l'opérateur, ce qui peut être très mal commode si celui-ci est chargé d'objet(s) à déposer dans le coffre à bagages.

L'invention propose quant à elle un système de déverrouillage et d'ouverture totalement mains libres.

A cet effet, l'invention concerne un système de verrouillage/déverrouillage et/ou d'ouverture d'un ouvrant de véhicule automobile comportant, sur le véhicule, une unité de gestion commandant des moyens de verrouillage/déverrouillage et/ou d'ouverture de l'ouvrant, ainsi que des moyens de détection de l'utilisateur reliés à l'unité de gestion et disposés sur la poignée de l'ouvrant.
Un tel système est décrit dans les documents DE 38 20 248 et MOTOKI HIRANO ET AL : « Keyless entry system with radio card transponder » IEEE Transactions on Industrial electronics Vol. 35, N°2, 1 mai 1988 pages 208-216.
Selon l'invention ces moyens de détection de l'utilisateur sont aptes à détecter la présence de la main de l'utilisateur au voisinage immédiat de la poignée de manière à permettre un déverrouillage totalement mains-libres.

D'autres caractéristiques et avantages de l'invention ressortiront encore de la description qui suit. Cette description est purement illustrative et non limitative. Elle doit être lue en regard des dessins annexés sur lesquels :
- la figure 1 est une vue de face de l'arrière d'un véhicule équipé d'un système de déverrouillage et/ou d'ouverture conforme à un mode de réalisation possible de l'invention, cette vue de face étant complétée par une représentation schématique d'un transpondeur dudit système;
- la figure 2 est une représentation schématique en vue de côté de l'arrière du véhicule représenté sur la figure 1 ;
- la figure 3 est une vue de face de l'arrière semblable à celle de la figure 1, sur laquelle on a porté les zones où un opérateur doit successivement placer son transpondeur pour actionner le déverrouillage et/ou l'ouverture du coffre ;
- la figure 4 est une vue de dessus d'un véhicule automobile dont le verrouillage/déverrouillage est commandé par un système conforme à un mode de réalisation possible de l'invention.

Le véhicule illustré sur les figures a été référencé par 1, son coffre par C.

Le système de déverrouillage et/ou d'ouverture de coffre qui équipe ce véhicule 1 comporte des moyens 3 d'émission/réception à courte portée destinés à interroger un transpondeur 4 porté par un utilisateur.

Par transpondeur, on entend ici et dans tout le présent texte un émetteur/récepteur dépourvu de source d'alimentation autonome, et téléalimenté par les signaux radiofréquence qu'il reçoit en provenance de l'unité avec laquelle il dialogue.

Ces moyens 3 comportent en particulier au moins deux antennes 5a, 5b réparties en deux endroits de l'arrière du véhicule.

Les antennes 5a, 5b peuvent être par exemple réparties dans une direction correspondant à la largeur du coffre, notamment être disposées de part et d'autre de l'axe longitudinal du véhicule, en étant séparées l'une de l'autre afin de réaliser deux lobes d'émission ne présentant pas ou peu de recouvrement.

Selon la configuration du véhicule, elles peuvent être portées par l'ouvrant du coffre, ou être disposées à proximité immédiate dudit ouvrant, par exemple à l'intérieur de pare-chocs du véhicule ou encore être intégrées au voisinage immédiat des feux arrières de la voiture ou à l'intérieur desdits feux arrières.

Les moyens d'émission/réception 3 comportent également des unités d'interface 6a, 6b auxquelles les antennes 5a, 5b sont respectivement reliées, ainsi qu'une unité de gestion 2 disposée à l'intérieur du véhicule et à laquelle ces unités d'interface 6a, 6b sont reliées.

C'est cette unité de gestion 2 qui envoie des ordres à la serrure du coffre du véhicule pour commander son déverrouillage et son ouverture. La gestion du déverrouillage et de l'ouverture du coffre C par ladite unité 2 sera décrite plus loin de façon détaillée.

Le transpondeur 4 est une unité d'émission/réception destinée à émettre un code d'identification à la suite d'une séquence d'interrogation émise depuis le véhicule 1 par l'intermédiaire des moyens d'émission 3.

Sa portée est relativement réduite (de l'ordre de quelques dizaines de centimètres).

Il comprend principalement, de façon connue en soi, un enroulement secondaire 4a qui se charge et se décharge sous l'effet du rayonnement radio-fréquence transmis par un enroulement primaire que comportent les moyens d'émission 3, ainsi qu'un circuit intégré 4b dans lequel est stocké et géré le code d'identification de l'utilisateur.

Ce transpondeur 4 est par exemple logé sur un élément de type bijou, tel qu'un bracelet, notamment un bracelet de montre, une bague, un bouton de manchette, etc. Il peut également être porté par l'utilisateur dans une poche, à sa ceinture ou à l'extrémité d'une manche d'un vêtement.

Par ailleurs, des moyens 7 sont également prévus au niveau du coffre C ou au voisinage de celui-ci pour détecter la présence de l'utilisateur au voisinage de l'ouvrant dudit coffre.

Ces moyens 7 sont reliés à l'unité de gestion 2 et celle-ci déclenche l'interrogation du transpondeur 4 par les moyens d'émission/réception 3 lorsque la présence de l'utilisateur est détectée par les moyens 7.

Ces moyens 7 sont par exemple constitués par un ou plusieurs capteurs à ultrasons.

Pour ouvrir et déverrouiller le coffre C de son véhicule 1, l'opérateur doit présenter le transpondeur 4 successivement devant chacune des deux antennes 5a, 5b selon une séquence précise.

Cette séquence est choisie de façon à ce que le déverrouillage et l'ouverture ne puissent pas être déclenchés par des mouvements anodins du porteur du transpondeur 4, et notamment lorsque celui-ci passe derrière son véhicule sans souhaiter ouvrir son coffre.

Le coffre C du véhicule 1 est avantageusement équipé de moyens de visualisation 8, par exemple des voyants bicolores disposés à proximité des antennes 5a, 5b. Ces moyens 8 sont destinés à aider le porteur du transpondeur à réaliser les gestes nécessaires à l'ouverture mains libres, ainsi qu'à l'avertir du déverrouillage effectif du coffre C, puis de son ouverture automatique.

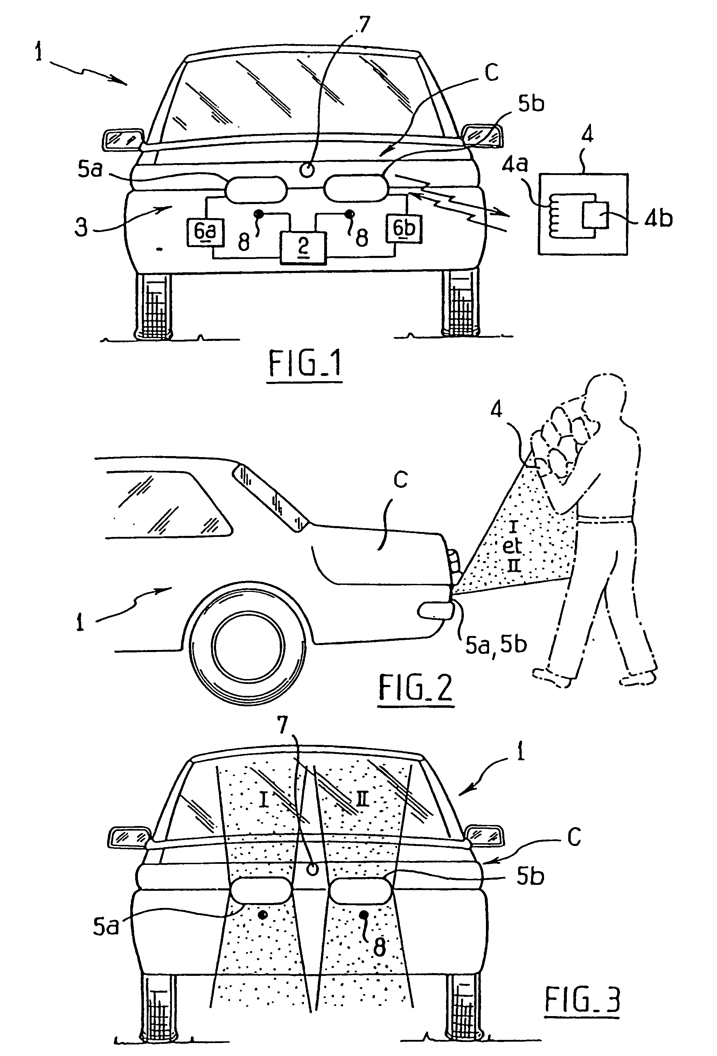

Un exemple de séquence de commande va maintenant être décrit en référence aux figures 2 et 3, dans le cas où l'opérateur porte le transpondeur 4 sur un bracelet au niveau de son poignet.

Cet opérateur, qui a par exemple les bras chargés, positionne son bras porteur du transpondeur 4 derrière le coffre C, de façon décalée de 5 à 30 cm vers la droite ou la gauche par rapport au centre dudit coffre C.

Il est alors détecté par le capteur de présence 7 qui déclenche une séquence d'interrogations sur chacune des deux antennes 5a, 5b situées de part et d'autre de l'axe central du coffre.

Si l'opérateur est correctement positionné - c'est à dire si le transpondeur 4 est situé dans une des deux zones I ou II telles que représentées sur la figure 3, dans lesquelles il est susceptible de dialoguer avec les antennes 5a ou 5b - l'une desdites antennes 5a, 5b, et une seule d'entre elles, reçoit le signal de réponse émis par le transpondeur 4.

Le code dudit transpondeur 4 est reconnu par l'unité de gestion 2, qui commande les moyens de visualisation 8 pour indiquer à l'opérateur que son code a été reconnu par l'antenne devant laquelle il se trouve.

Par exemple, l'unité 2 allume un voyant vert situé au voisinage de cette antenne.

Lorsqu'il ce voyant s'allume, l'opérateur décale son bras de l'autre côté du coffre C pour, dans un délai déterminé (par exemple 1 à 5 secondes), le positionner devant la deuxième antenne 5a, 5b, afin que le code soit identifié au niveau de celle-ci.

Le voyant allumé au niveau de la première antenne s'éteint, puisque le code n'y est plus reçu du fait de l'éloignement du transpondeur 4.

Un voyant situé au voisinage de la deuxième antenne s'allume pour signaler que le signal du transpondeur 4 a été détecté au niveau de la deuxième antenne et que son code a été reconnu.

L'opérateur dispose alors du même laps de temps de 1 à 5 secondes pour à nouveau positionner le transpondeur 4 devant la première antenne.

Lorsque le code du transpondeur 4 est à nouveau reconnu par la première antenne les deux voyants verts des moyens 8 s'allument simultanément ou clignotent pour avertir l'opérateur du succès de la procédure de demande d'ouverture du coffre.

Puis l'unité 2 commande d'autres voyants des moyens de visualisation pour avertir l'opérateur de l'imminence de l'ouverture du coffre (par exemple par allumage simultané ou clignotement de deux voyants en rouge).

Bien entendu, dans le cas où le coffre du véhicule était déjà déverrouillé, l'unité de gestion 2 ne commande que l'ouverture du coffre.

On notera que la séquence d'aller-retour que doit effectuer l'opérateur avec son bras devant les antennes permet d'éviter que le simple passage de l'opérateur devant le coffre du véhicule ne déclenche de façon intempestive le déverrouillage et l'ouverture dudit coffre.

Si pour une raison quelconque, la séquence gestuelle de l'opérateur est interrompue (non reconnaissance du code par une seule antenne à la fois, non respect des plages de distance ou des temps impartis pour chaque position,...) la procédure devra être entièrement recommencée.

Les plages de temps et de distance sont optimisées afin de garantir d'une part une procédure simple et sans ambiguïté, d'autre part des contraintes gestuelles limitées, bien acceptées par l'utilisateur.

Par ailleurs, le coffre du véhicule peut présenter des moyens permettant un déclenchement manuel - par exemple un bouton-poussoir situé à proximité de l'une des antennes - dont l'actionnement doublé d'une reconnaissance correcte du code du transpondeur 4, entraîne le déverrouillage, puis l'ouverture automatique du coffre, avec la possibilité d'avertir l'utilisateur par l'intermédiaire de la visualisation décrite ci-dessus, de la reconnaissance du code, puis de l'imminence de l'ouverture du coffre. Cette fonction permet d'éviter la séquence gestuelle dans le cas où l'ouverture totalement mains libres n'est pas nécessaire ou pas souhaitée par l'utilisateur.

On a décrit une séquence gestuelle possible dans le cas où le transpondeur 4 est porté par le bras de l'utilisateur. Dans le cas où le transpondeur est porté sur une autre partie du corps (dans une poche, sur la ceinture, ...), d'autres types de séquence peuvent bien entendu être envisagées.

Un tel système de verrouillage est particulièrement avantageux dans le cas d'un ouvrant de coffre, mais pourrait bien entendu également être utilisé de façon plus générale pour la commande du déverrouillage et/ou de l'ouverture de tout ouvrant de véhicule automobile.

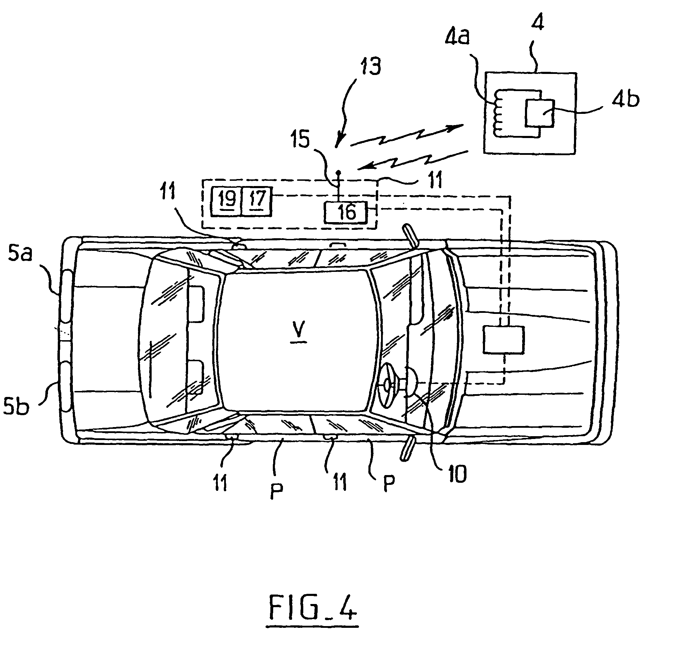

Par ailleurs, ainsi qu'on l'a illustré sur la figure 4, le transpondeur 4 porté par l'utilisateur peut également être utilisé pour commander le verrouillage/déverrouillage des portières - référencées par P - du véhicule.

A cet effet, les portières P présentent également des moyens 13 d'émission/réception à courte portée analogues aux moyens et 3 destinés à interroger le transpondeur 4 lorsque celui-ci est à proximité immédiate des poignées des portières P, ces poignées ayant été référencées par 11 sur la figure 4.

Ces moyens 13 comportent par exemple une antenne 15 d'émission/réception ainsi qu'une interface 16 qui est reliée à l'unité de gestion 2.

Des moyens 17 sont prévus sur le véhicule pour détecter la main de l'utilisateur lorsque celle-ci approche de la poignée 11 ou actionne celle-ci.

Ces moyens 17 sont reliés à l'unité de gestion 2. Celle-ci déclenche l'interrogation du transpondeur 14 par les moyens d'émission/réception 13, lorsque la présence de la main de l'utilisateur au niveau de la poignée 11 est détectée.

Ces moyens 17 sont par exemple constitués par un contact permettant de détecter le basculement de la poignée 11.

En variante encore, ils peuvent être constitués par des capteurs de présence de la main de type infrarouge ou par une plaque sensitive située sur la poignée 11.

Ainsi, un utilisateur qui porte un tel transpondeur 4 au niveau de sa main ou de son poignet commande le déverrouillage de la portière P sans autre manipulation que de basculer la poignée 11 pour ouvrir ladite portière.

Lorsque la présence physique de la main de l'utilisateur est détectée par les moyens 17, les moyens d'émission/réception 13 interrogent le transpondeur 4. Après reconnaissance par l'unité de gestion 2 du code d'identification porté par le transpondeur 4, celle-ci commande les moyens de verrouillage de la portière P de façon à déverrouiller celle-ci.

De manière avantageuse, le déverrouillage de la portière P intervient suffisamment rapidement pour que le mouvement de basculement de la poignée 11 permettant d'activer les moyens 17, soit poursuivi et provoque la libération des moyens de verrouillage mécaniques de la portière.

Pour le verrouillage de la portière P, il est prévu des moyens 19 permettant de détecter une pression sur la poignée 11. Ces moyens 19 sont également reliés à l'unité de gestion 2.

En refermant la portière P, l'utilisateur appuie sur la poignée 11. Lorsque la pression de la main de l'utilisateur sur la poignée 11 est détectée par les moyens 19, l'unité 2 déclenche le verrouillage de la portière P, lorsque celle-ci est refermée.

On comprendra aisément que par rapport à des systèmes classiques à clé mécanique ou à télécommande, un tel système apporte à l'utilisateur un plus grand confort ainsi que des gains de temps importants, notamment sur des trajets avec arrêts fréquents, puisqu'il est totalement transparent pour l'utilisateur. En particulier, l'utilisateur n'a pas à rechercher sa clé mécanique ou sa télécommande dans sa poche ou son sac lorsqu'il veut ouvrir son véhicule.

Par ailleurs encore, le circuit intégré 4b du transpondeur 4 peut stocker d'autres informations personnalisées relatives à l'utilisateur, par exemple celles concernant le réglage de la position du siège, du volant, des rétroviseurs, etc.

Ces informations sont transmises avec le code d'identification, lors de l'interrogation du transpondeur 4 par les moyens d'émission/réception 13.

L'actionnement des différents éléments du véhicule concernés par ces informations est alors par exemple réalisé simultanément au verrouillage/déverrouillage des portières.

On notera en outre que le système proposé par l'invention permet à l'unité de gestion 2 de localiser la portière P au niveau de laquelle l'utilisateur se présente.

Cette information peut être utilisée par l'unité 2 pour commander de façon localisée le réglage des différents éléments précités (sièges, rétroviseurs, etc.): seul le siège correspondant à la portière P à laquelle l'utilisateur s'est présenté sera réglé ; également, les rétroviseurs ou la position du volant ne seront réglés que si l'utilisateur s'est présenté au niveau de la portière conducteur ; il pourra également être prévu que seule la portière à laquelle l'utilisateur s'est présenté est déverrouillée, les autres portières restant verrouillées.

Le transpondeur 4 peut également avantageusement être utilisé pour la désactivation du dispositif d'immobilisation de contrôle moteur.

Le système selon l'invention permettant de totalement supprimer les clés mécaniques, le conducteur met le contact et démarre le véhicule en tournant un interrupteur multipositions situé par exemple sous le volant.

Le transpondeur 4 est interrogé par exemple lorsqu'un mouvement dudit interrupteur de démarrage est détecté. Le code fourni par le transpondeur 4 est transmis à l'unité de gestion du dispositif d'immobilisation.

Cette unité de gestion est avantageusement l'unité de gestion 2 reliée aux unités d'interface 6a, 6b et 16.

En variante, il peut être prévu que l'interrupteur de démarrage est normalement bloqué et que seule la reconnaissance du code d'identification correct autorise son basculement.

En variante encore, il peut être prévu un système de débrayage qui est tel que l'interrupteur n'est pas en prise tant que le code d'identification n'a pas été reçu.

On notera qu'habituellement un conducteur ne se sert pas de la même main pour actionner la poignée de la portière de sa voiture et commander la mise du contact et le démarrage : pour des voitures roulant à droite, l'ouverture de la portière est réalisée par la main gauche, alors que le contact est actionné par la main droite.

Pour permettre une interrogation indépendamment de la main qui porte le transpondeur 4, les moyens d'émission/réception à l'intérieur de l'habitacle du véhicule automobile comportent avantageusement une antenne en boucle 10 qui fait le tour de la zone des instruments de la planche de bord ou qui est située autour du volant. En variante encore, l'antenne peut être située au niveau du bloc de commutation sous le volant.

Ces différentes dispositions d'antennes permettent en effet une interrogation d'un transpondeur 4 porté par l'utilisateur au voisinage de sa main gauche, lorsque ladite main est sous le volant pour la mise du contact. Elles permettent également d'interroger en permanence le transpondeur 4 lorsque le conducteur a la main sur le volant, pour vérifier que ledit transpondeur 4 est toujours présent au poignet du conducteur pendant la conduite.

L'unité de gestion 2 réalise à cet effet des interrogations régulières dudit transpondeur 4. Elle interprète une absence de réponse pendant un court laps de temps comme un geste du conducteur et ne la signale pas. Par contre, une absence prolongée est signalée au conducteur par un voyant sur la planche de bord ou un signal sonore, de sorte que le conducteur est immédiatement prévenu si le transpondeur 4 n'est plus à sa place sur son poignet ou sa main.

Comme on l'aura compris, un tel système est transparent : un utilisateur commande le déverrouillage des portières sans avoir à effectuer d'autres opérations que celle de manipulation de la poignée de sa portière.

En outre, avec un tel système, le risque que l'utilisateur ne se sépare de son transpondeur après être rentré dans le véhicule est réduit. Le transpondeur est en effet soit porté par un élément de type bijou, tel qu'un bracelet, dont l'utilisateur n'a aucune raison de se dessaisir lorsqu'il conduit, soit logé à une extrémité d'une manche d'un vêtement, que l'utilisateur porte a priori en permanence sur lui.

Par ailleurs, un tel système utilise une électronique simplifiée. Il ne nécessite des antennes d'émission et de réception qu'au niveau des poignées des portières. En outre, les émissions radiofréquences sont localisées et de courte portée, ce qui supprime les risques d'interférences, ainsi que les risques de conflit entre utilisateurs.

Le caractère local des échanges réduit également les risques de piratage.

On notera également qu'un transpondeur est, du fait qu'il ne comporte pas de piles, facilement miniaturisable.

En outre, avec le système proposé par l'invention, la seule présence du porteur du transpondeur dans l'environnement du véhicule ne suffit pas à commander le déverrouillage des portières. Il faut que la main de l'utilisateur soit déplacée pour venir à proximité immédiate de la poignée.

Dans la mesure où l'utilisation conserve un rôle actif dans l'opération de déverrouillage, un tel système supprime par conséquent les autorisations de déverrouillage intempestives qui sont un inconvénient majeur des systèmes interactifs.

## Revendications

1. Système de déverrouillage et/ou d'ouverture d'un ouvrant (C) de véhicule automobile comportant, sur le véhicule, une unité de gestion (2) apte à commander des moyens de déverrouillage et/ou d'ouverture de l'ouvrant, ainsi que des moyens de détection de l'utilisateur reliés à l'unité de gestion et disposés sur la poignée (11) de l'ouvrant, **caractérisé en ce que** ces moyens (17) de détection de l'utilisateur sont aptes à détecter la présence de la main de l'utilisateur au voisinage immédiat de la poignée et aptes à permettre un déverrouillage totalement mains-libres.

2. Système de déverrouillage et/ou d'ouverture selon la revendication 1, **caractérisé en ce que**, le système comportant en outre des moyens d'émission/réception (3) du véhicule reliés à l'unité de gestion (2), et des moyens d'émission/réception (4) portés par l'utilisateur et destinés à transmettre aux moyens d'émission/réception du véhicule un code d'identification pour le déverrouillage et/ou l'ouverture de l'ouvrant, les moyens de détection de l'utilisateur étant aptes à declencher l'interrogation des moyens d'émission/réception (4) portés par l'utilisateur lorsque la présence de l'utilisateur est détectée.

3. Système de déverrouillage et/ou d'ouverture selon l'une quelconque des revendications précédentes, **caractérisé en ce que** lesdits moyens (7) de détection de l'utilisateur comprennent un capteur de présence de la main de type infrarouge.

4. Système de déverrouillage et/ou d'ouverture selon l'une quelconque des revendications 1 à 2, **caractérisé en ce que** lesdits moyens (7) de détection de l'utilisateur comprennent un capteur à ultrasons.

5. Système de déverrouillage et/ou d'ouverture selon l'une quelconque des revendications 2 à 4, **caractérisé en ce que** l'unité de gestion (2) est apte à commander les moyens de déverrouillage et/ou d'ouverture de façon à déverrouiller l'ouvrant en cas de reconnaissance du code d'identification.

## Patentansprüche

1. System zum Entriegeln und/oder Öffnen einer Tür/Klappe, (C) eines Kraftfahrzeugs, das am Fahrzeug eine Leiteinheit (2) aufweist, die dazu geeignet ist, Mittel zum Entriegeln und/oder Öffnen der Tür/Klappe zu steuern, sowie Mittel zur Erfassung des Benutzers, die mit der Leiteinheit verbunden und am Griff (11) der Tür/Klappe angeordnet sind, **dadurch gekennzeichnet, dass** diese Mittel (17) zur Erfassung des Benutzers dazu geeignet sind, die Anwesenheit der Hand des Benutzers in der unmittelbaren Nähe des Griffs zu erfassen und eine vollständig freihändige Entriegelung zu ermöglichen.

2. System zum Entriegeln und/oder Öffnen nach Anspruch 1, **dadurch gekennzeichnet, dass** das System weiterhin Sende-/Empfangsmittel (3) des Fahrzeuges aufweist, die mit der Leiteinheit (2) verbunden sind, sowie Sende-/Empfangsmittel (4), die vom Benutzer mitgeführt werden und dazu bestimmt sind, den Sende-/Empfangsmitteln des Fahrzeugs einen Identifikationscode zum Entriegeln und/oder Öffnen der Tür/Klappe zu übertragen, wobei die Mittel zur Erfassung des Benutzers dazu geeignet sind, die Abfrage der vom Benutzer mitgeführten Sende-/Empfangsmittel (4) auszulösen, wenn die Anwesenheit des Benutzers erfasst wird.

3. System zum Entriegeln und/oder Öffnen nach einem der vorhergehenden Ansprüche, **dadurch gekennzeichnet, dass** die Mittel (7) zur Erfassung des Benutzers einen Sensor des Typs Infrarotsensor aufweisen, der die Anwesenheit der Hand erfasst.

4. System zum Entriegeln und/oder Öffnen nach einem der Ansprüche 1 bis 2, **dadurch gekennzeichnet, dass** die Mittel (7) zur Erfassung des Benutzers einen Ultraschallsensor aufweisen.

5. System zum Entriegeln und/oder Öffnen nach einem der Ansprüche 2 bis 4, **dadurch gekennzeichnet, dass** die Leiteinheit (2) dazu geeignet ist, die Mittel zum Entriegeln und/oder Öffnen so zu steuern, dass sie die Tür/Klappe entriegeln, wenn der Identifikationscode erkannt wird.

## Claims

1. A system for unlocking and/or opening an openable member (C) of a motor vehicle, comprising, on the vehicle, a control unit (2) adapted to control unlocking and/or opening means for the openable member, together with means for detecting the user, connected to the control unit and disposed on the handle (11) of the openable member, **characterised in that** the said user detecting means (17) are adapted to detect the presence of the user's hand in the immediate vicinity of the handle, and further adapted to permit totally hands-free unlocking.

2. A system for unlocking and/or opening according to Claim 1, **characterised in that**, the system further including transmitter/receiver means (3) of the vehicle, connected to the control unit (2), and transmitter/receiver means (4) carried by the user and intended to transmit to the transmitter/receiver means of the vehicle an identification code for unlocking and/or opening the openable member, the means for detecting the user being adapted to initiate interrogation of the transmitter/receiver means (4) carried by the user when the presence of the user is detected.

3. A system for unlocking and/or opening according to any one of the preceding Claims, **characterised in that** the said means (7) for detecting the user comprise a user's hand presence sensor of the infra-red type.

4. A system for unlocking and/or opening according to any one of Claim 1 or Claim 2, **characterised in that** the said means (7) for detecting the user comprise an ultrasonic sensor.

5. A system for unlocking and/or opening according to any one of Claims 2 to 4, **characterised in that** the control unit (2) is adapted to control the unlocking and/or opening means in such a way as to unlock the opening member when the identification code is recognised.
